# EUROPÄISCHE PATENTSCHRIFT

(11) **EP 3 819 053 B1**
(45) Veröffentlichungstag und Bekanntmachung des Hinweises auf die Patenterteilung: **27.04.2022**
(21) Anmeldenummer: 20200269.7
(22) Anmeldetag: 06.10.2020
(51) Int. Cl.: B23B 51/02, B23B 51/06

(54) **SPIRALBOHRWERKZEUG**
SPIRAL DRILLING TOOL
OUTIL DE FORAGE EN SPIRALE

(30) Priorität: 05.11.2019 DE 102019129767
(43) Veröffentlichungstag der Anmeldung: 12.05.2021
(73) Patentinhaber: AUDI AG, 85057 Ingolstadt (DE); AUDI HUNGARIA Zrt., 9027 Györ (HU)
(72) Erfinder: Bugár, Attila, 9081 Gyorujbarat (HU); Kopton, Peter, 85092 Kösching (DE)
(74) Vertreter: Bierschneider, Walter

(56) Entgegenhaltungen:
- EP-A1- 3 278 911
- EP-A2- 1 468 768
- WO-A1-2018/050267
- WO-A1-2019/201962
- DE-A1-102013 205 056
- DE-C1- 3 820 485

## Beschreibung

Die Erfindung betrifft ein Spiralbohrwerkzeug nach dem Oberbegriff des Anspruches 1. Ein solches Spiralbohrwerkzeug ist aus der WO 2019/201962 A1 bekannt.

Beim Bohren eines Leichtmetall-Werkstückes, etwa eines Aluminium-Zylinderblocks für ein Kraftfahrzeug, kann ein zum Beispiel zweischneidiger Spiralbohrer eingesetzt werden, der eine innere Kühl- und/oder Schmiermittelzufuhr für eine Minimalmengenschmierung (MMS) aufweist.

Ein gattungsgemäßes Spiralbohrwerkzeug weist einen Spannschaft und einen daran anschließenden Bohrkörper auf. Entlang dessen Rotationsachse erstreckt sich spiralförmig zumindest ein Bohrer-Steg bis zur Bohrerspitze. Zur Steigerung der Prozess-Stabilität speziell beim Bohren eines Leichtmetall-Werkstückes ist es bevorzugt, wenn je Bohrer-Steg zwei Stützfasen bereitgestellt sind, um ein seitliches Auslenken des Spiralbohrwerkzeugs während des Bohrvorgangs zu unterbinden. Zwischen den beiden Stützfasen erstreckt sich über eine Nutbreite eine Steg-Nut. Die Steg-Nut weist im Vergleich zur Bohrer-Spannut eine stark reduzierte Nuttiefe auf. Dadurch besteht ein Risiko, dass sich die Steg-Nut frühzeitig mit Werkstück-Werkstoff zusetzt, wodurch eine prozesssichere Zerspanung beeinträchtigt wird und damit eine Werkzeug-Standzeit reduziert wird.

Aus der DE 10 2016 113 348 A1 ist ein spanabhebendes Werkzeug mit Freiflächenstruktur zur KSS-Lenkung bekannt. Aus der DE 10 2014 208 134 A1 ist ein weiterer Spiralbohrer bekannt.

Die Aufgabe der Erfindung besteht darin, ein Spiralbohrwerkzeug für die Spanbearbeitung metallischer Werkstücke bereitzustellen, mit dem im Vergleich zum Stand der Technik eine Werkzeug-Standzeit erhöht wird und/oder eine im Vergleich zum Stand der Technik prozesssichere Zerspanung erfolgt.

Die Aufgabe ist durch die Merkmale des Anspruches 1 gelöst. Bevorzugte Weiterbildungen der Erfindung sind in den Unteransprüchen offenbart.

Gemäß dem kennzeichnenden Teil des Anspruches 1 ist im Nutboden der Steg-Nut eine Pumpen- bzw. Strömungsleitkontur ausgebildet. Im Bohrvorgang bewirkt die Pumpen- bzw. Strömungsleitkontur eine stabile, unterbrechungsfreie Kühl- und/oder Schmiermittelströmung durch die Steg-Nut in Richtung auf den Spannschaft. Auf diese Weise wird während des Bohrvorgangs eine kontinuierliche Kühl- und/oder Schmiermittelströmung durch die Steg-Nut unterstützt, wodurch ein frühzeitiges Zusetzen der Steg-Nut verhindert werden kann.

Mit Hilfe der Pumpen- bzw. Strömungsleitkontur wird in der Steg-Nut eine zusätzliche Druckdifferenz erzeugt, um eine stabile sowie stationäre Strömung des Kühl- und/oder Schmiermittels durch die Steg-Nut in Richtung Spannschaft zu gewährleisten. Ohne Bereitstellung der erfindungsgemäßen Pumpen- bzw. Strömungsleitkontur besteht dagegen die Gefahr, dass sich lediglich eine instabile Strömung des Kühl- und/oder Schmiermittels in Richtung Spannschaft aufbaut, deren Strömungsrichtung gegebenenfalls wechselt und/oder die mit starken Strömungsturbulenzen verbunden ist, wodurch eine Späne-Abfuhr beeinträchtigt ist.

In einer technischen Umsetzung kann mittels der Pumpen- bzw. Strömungsleitkontur sich der Strömungsquerschnitt der Steg-Nut von der Bohrerspitze über einen ersten Strömungsweg in Richtung Spannschaft bis Erreichen einer Scheitelstelle verengen. Im weiteren Nutverlauf in Richtung Spannschaft kann sich dagegen der Strömungsquerschnitt über einen zweiten Strömungsweg ausweiten.

Die Pumpen- bzw. Strömungsleitkontur kann zwischen der Bohrerspitze und einer Scheitelstelle eine drucksteigernde schaufelartige oder wannenförmige Vertiefung im Nutboden der Steg-Nut aufweisen. Im Hinblick auf eine einwandfreie Strömungsführung ist es bevorzugt, wenn der Strömungsquerschnitt (zum Beispiel die Tiefe) der drucksteigernden schaufelartigen Vertiefung (über den ersten Strömungsweg) in Richtung auf den Spannschaft kontinuierlich bis zur Scheitelstelle bis auf Null abnimmt.

Alternativ und/oder zusätzlich kann die Pumpen- bzw. Strömungsleitkontur eine druckreduzierende schaufelartige oder wannenförmige Vertiefung im Nutboden der Steg-Nut aufweisen, um über den Strömungsweg hinweg eine Druckdifferenz zwischen der Bohrerspitze in Richtung auf den Spannschaft zu bewerkstelligen. In diesem Fall kann die druckreduzierende schaufelartige Vertiefung mit ausreichend großem axialen Abstand zur Bohrerspitze im Nutboden der Steg-Nut ausgebildet sein.

Besonders bevorzugt ist es, wenn die Pumpen- bzw. Strömungsleitkontur sowohl eine drucksteigernde schaufelartige Vertiefung als auch eine druckreduzierende schaufelartige Vertiefung aufweist. In diesem Fall kann sich die druckreduzierende schaufelartige Vertiefung unmittelbar an der Scheitelstelle an der drucksteigernden schaufelartigen Vertiefung anschließen.

Das Spiralbohrwerkzeug kann bevorzugt sowohl eine stirnseitige Hauptschneide an der Bohrerspitze als auch eine entlang der Werkzeug-Rotationsachse verlaufende Nebenschneide aufweisen. In diesem Fall kann der Bohrer-Steg in der Bohrer-Umfangsrichtung an eine Spannut grenzen, durch die im Bohrvorgang erzeugte Späne in Richtung Spannschaft abführbar sind. Die Bohrer-Spannut kann eine im Vergleich zur Steg-Nut wesentlich größere Nuttiefe aufweisen, um einen einwandfreien Späne-Abtransport zu gewährleisten. Die Spannut kann sich bis zur, stirnseitig am Bohrer-Steg ausgebildeten, querverlaufenden Hauptschneide erstrecken. An der Hauptschneide können eine Spanfläche der Spannut und eine stirnseitige Freifläche der Bohrerspitze zusammenlaufen. Zudem kann die Spanfläche der Spannut an der, in Bohrerlängsrichtung spiralförmig verlaufenden Nebenschneide in eine äußere Führungsfläche einer schneidenzugewandten Stützfase übergehen.

Um die Belastung der schneidenabgewandten Stützfase im Bohrvorgang zu reduzieren, kann die Pumpen- bzw. Strömungsleitkontur unmittelbar an die schneidenabgewandte Stützfase angrenzen. Vor diesem Hintergrund kann die schneidenabgewandte Stützfase eine Seitenflanke aufweisen, die die Steg-Nut begrenzt und kantenfrei sowie flächenbündig in die schaufelartige Vertiefung der Pumpen- bzw. Strömungsleitkontur übergeht.

Die schaufelartige Vertiefung kann an einer Übergangskante in den Nutboden der Steg-Nut übergehen. Bevorzugt ist es, wenn die schaufelartige Vertiefung in der Bohrerumfangsrichtung betrachtet nicht bis unmittelbar an die schneidenzugewandte Stützfase herangeführt ist, sondern vielmehr mit Abstand dazu positioniert ist.

Bevorzugt ist es, wenn im Bohrvorgang die durch die Steg-Nut strömende Kühl- und/oder Schmiermittelströmung in einer Förderrichtung mit den, in der Bohrer-Spannut abgeführten Spänen zusammengeführt werden. Vor diesem Hintergrund kann die Steg-Nut im Strömungsverlauf nach der Pumpen- bzw. Strömungsleitkontur in Strömungsverbindung mit der Bohrer-Spannut gebracht werden (bzw. in die Bohrer-Spannut einmünden). Hierzu kann die schneidenabgewandte Stützfase eine Unterbrechung aufweisen, um eine solche Strömungsverbindung bereitzustellen.

Die Steg-Nut kann zur Bohrerspitze offen gestaltet sein und an einer Rückenkante in die stirnseitige Freifläche der Bohrerspitze übergehen. Bevorzugt kann die drucksteigernde schaufelartige Vertiefung der Pumpen- bzw. Strömungsleitkontur zur Bohrerspitze hin offen gestaltet sein und an der Rückenkante in die stirnseitige Freifläche der Bohrerspitze übergehen. In diesem Fall sind im Verlauf der Rückenkante ein stirnseitiger Nutrand der Steg-Nut sowie ein stirnseitiger Rand der drucksteigernden schaufelartigen Vertiefung ausgebildet.

Im Hinblick auf eine effiziente Kühlung bzw. Schmierung ist es bevorzugt, wenn der Kühl- und/oder Schmiermittelkanal einen Kanalaustritt in der stirnseitigen Freifläche der Bohrerspitze aufweist. In der stirnseitigen Freifläche kann eine stirnseitig offene Versorgungsnut ausgebildet sein. Über die Versorgungsnut kann der Kanalaustritt mit der Steg-Nut und/oder mit der Bohrer-Spannut verbunden werden.

Um den Materialaufwand beim Kühl- und/oder Schmiermittel zu reduzieren, ist es bevorzugt, wenn das Kühl- und/oder Schmiermittel mit einem möglichst laminaren Strömungsbild zum Kanalaustritt gefördert wird. Vor diesem Hintergrund kann der Kühl- und/oder Schmiermittelkanal einen koaxial zur Werkzeug-Rotationsachse verlaufenden Zentralkanal aufweisen. Dieser kann an einer Verzweigungsstelle in zumindest einen zum Kanalaustritt führenden Teilkanal übergehen. Zur Bereitstellung eines möglichst laminaren Strömungsbilds kann der Strömungsquerschnitt in der Verzweigungsstelle größer sein als im Zentralkanal. Der Strömungsquerschnitt im Teilkanal kann ausgehend von der Verzweigungsstelle bis zum Kanalaustritt sich bevorzugt konusartig verjüngen.

Bei einem zwei- oder mehrschneidigen Spiralbohrwerkzeug sind zumindest zwei Bohrer-Stege mit zwischengeordneten Bohrer-Spannuten vorgesehen. Jeder der Bohrer-Stege weist jeweils einen stirnseitigen Kanalaustritt auf. Im Hinblick auf einen weitgehend laminaren Strömungsverlauf innerhalb des Spiralbohrwerkzeugs ist es bevorzugt, wenn die zu den Kanalaustritten führenden Teilkanäle an der Verzweigungsstelle unter Bildung eines Inneneckbereiches an einer Scheitelspitze spitzwinklig zusammenlaufen. In diesem Fall können sich die Teilkanäle geradlinig von der Verzweigungsstelle (sternförmig nach radial außen) bis zu dem jeweiligen Kanalaustritt erstrecken. Um eine Werkzeug-Belastung weiter zu reduzieren, ist es bevorzugt, wenn die außenumfangsseitige Stützfläche der schneidenabgewandten Stützfase auf einen kleineren Durchmesser liegt als die Stützfläche der schneidenzugewandten Stützfase.

Nachfolgend ist ein Ausführungsbeispiel der Erfindung anhand der beigefügten Figuren beschrieben.

Es zeigen:
- Figur 1 und 2: jeweils Ansichten eines Spiralbohrwerkzeugs in Alleinstellung;
- Figur 3 und 4: jeweils unterschiedliche Detail-Ansichten der Bohrerspitze des Spiralbohrwerkzeugs;
- Figur 5: eine Ansicht entsprechend der Figur 2, anhand der ein Bohrvorgang veranschaulicht ist; und
- Figur 6: eine Teilschnittansicht des Spiralbohrwerkzeugs.

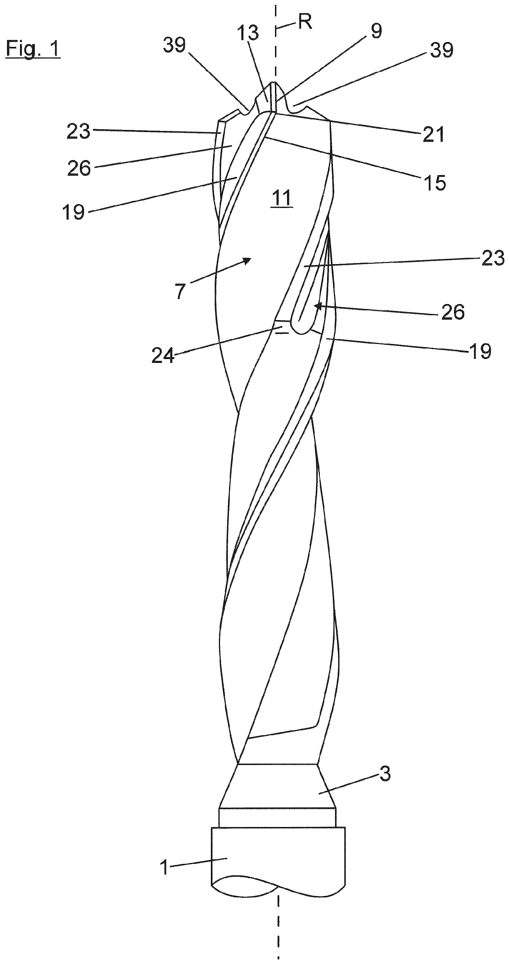

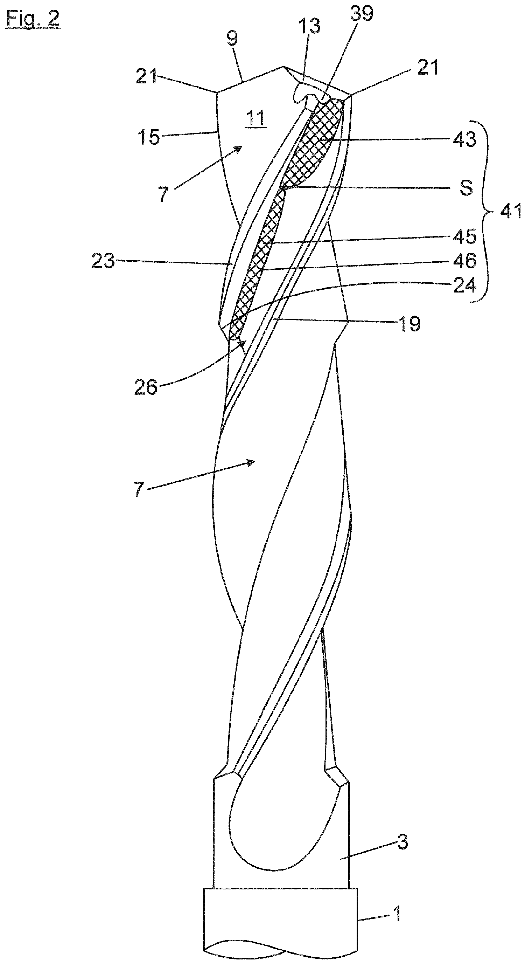

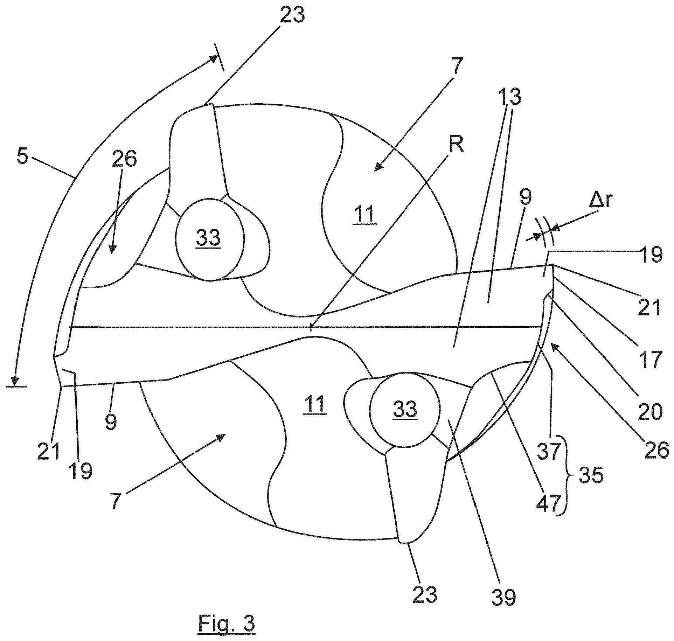

In der Figur 1 und 2 ist jeweils ein Spiralbohrwerkzeug in unterschiedlichen Ansichten gezeigt. Demzufolge weist das Spiralbohrwerkzeug einen Spannschaft 1 mit daran anschließendem Bohrkörper 3 auf. Der Bohrkörper 3 ist zweischneidig mit insgesamt zwei Bohrer-Stegen 5 (Figur 3) ausgebildet, die sich entlang einer Rotationsachse R des Spiralbohrwerkzeugs spiralförmig bis zu einer Bohrerspitze erstrecken. Die beiden Bohrer-Stege 5 sind in Bohrer-Umfangsrichtung über Bohrer-Spannuten 7 voneinander beabstandet. Zudem sind die Bohrer-Stege 5 in der Figur 3 zueinander mit Bezug auf die Rotationsachse R punktsymmetrisch ausgeführt.

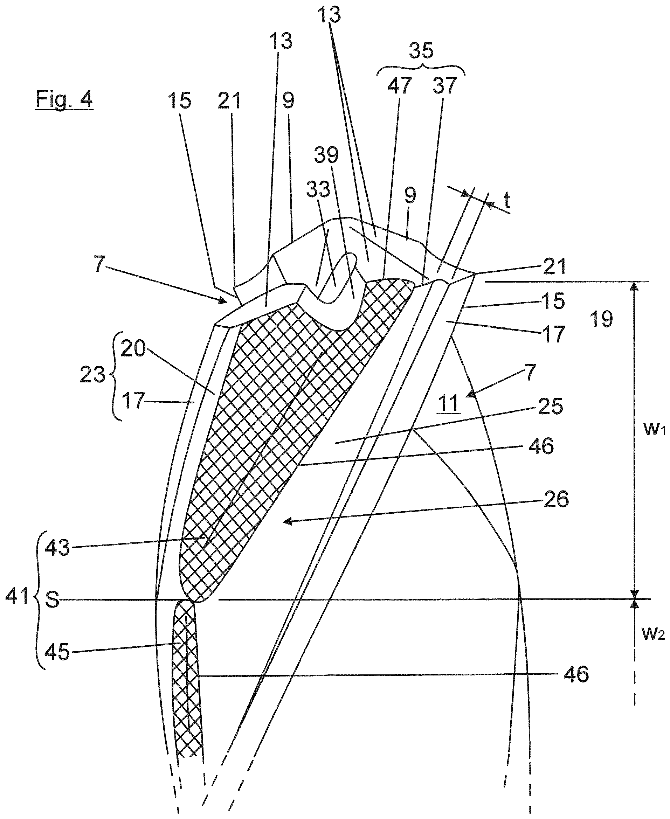

Jede der Bohrer-Spannuten 7 erstreckt sich in Richtung Bohrerspitze bis zu einer, stirnseitig am jeweiligen Bohrer-Steg 5 ausgebildeten, querverlaufenden Hauptschneide 9. An der Hauptschneide 9 laufen eine Spanfläche 11 der Bohrer-Spannut 7 und eine stirnseitige Freifläche 13 der Bohrerspitze zusammen. Zudem geht die Spanfläche 11 der Bohrer-Spannut 7 in der Figur 4 an einer, in Bohrerlängsrichtung spiralförmig verlaufenden Nebenschneide 15 in eine äußere Stützfläche 17 einer schneidenzugewandten Stützfase 19 über. Die Hauptschneide 9 und die Nebenschneide 15 laufen an einer stirnseitigen, radial äußeren Schneidenecke 21 zusammen.

Jeder Bohrer-Steg 5 weist insgesamt zwei Stützfasen 19, 23 auf, und zwar die schneidenzugewandte Stützfase 19 und eine schneidenabgewandte Stützfase 23. Die beiden Stützfasen 19, 23 sind in Umfangsrichtung über eine Nutbreite einer Steg-Nut 26 beabstandet. Die sich zwischen den beiden Stützfasen 19 23 erstreckende Steg-Nut 26 weist einen Nutboden 25 auf, der gegenüber den beiden Stützfasen 19, 23 um eine Nuttiefe t (Figur 4) radial nach innen zurückgesetzt ist.

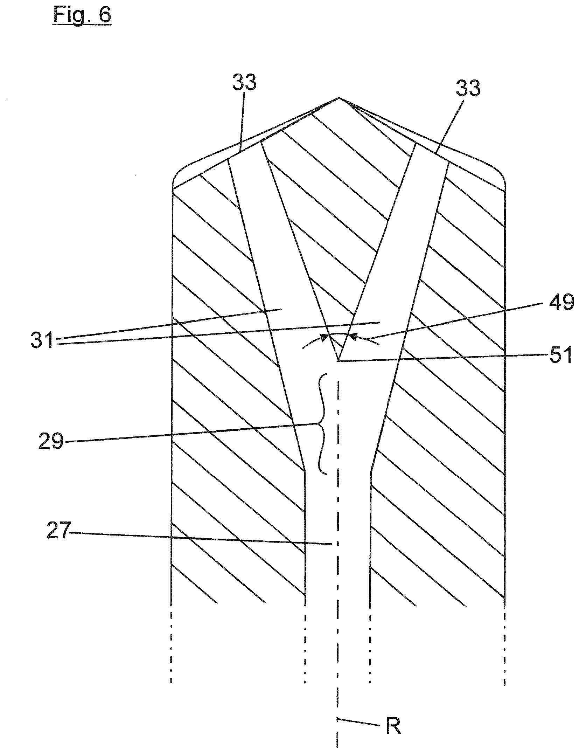

Das Spiralbohrwerkzeug weist gemäß der Figur 6 eine innere Kühl- und/oder Schmiermittelzufuhr mit einem Zentralkanal 27 auf, der an einer Verzweigungsstelle 29 in insgesamt zwei Teilkanäle 31 übergeht. Die beiden Teilkanäle 31 sind bis zu einem stirnseitigen Kanalaustritt 33 geführt. Jeder der beiden Kanalaustritte 33 ist in der stirnseitigen Freifläche 13 der Bohrerspitze ausgebildet.

Wie aus der Figur 4 weiter hervorgeht, ist die Steg-Nut 26 zur Bohrerspitze hin offen gestaltet und geht an einer Rückenkante 35 in die stirnseitige Freifläche 13 der Bohrerspitze über. Im Verlauf der Rückenkante 35 findet sich der stirnseitige Nutrand 37 der Steg-Nut 26 wieder.

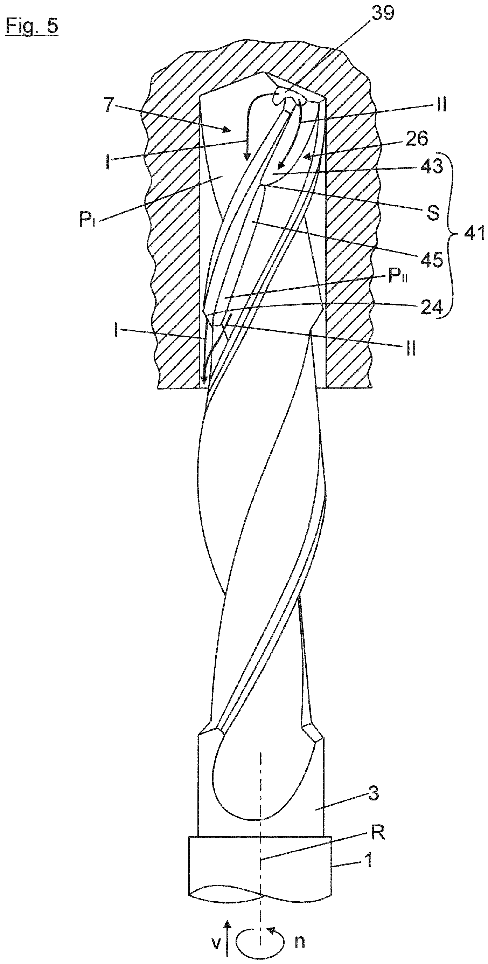

Im Hinblick auf eine ausreichende Versorgung der Bohrer-Spannut 7 und der Steg-Nut 26 ist in der stirnseitigen Freifläche 13 der Bohrerspitze eine Versorgungsnut 39 ausgebildet. Über die Versorgungsnut 39 ist der jeweilige Kanalaustritt 33 in Strömungsverbindung mit der Steg-Nut 26 und der Bohrer-Spannut 7. In der Bohrer-Spannut 7 werden die im Bohrvorgang erzeugten Späne in Richtung Spannschaft 1 abgeführt. Zur Unterstützung der Späne-Abfuhr wird die Bohrerspitze über die Kanalaustritte 33 mit Kühl- und/oder Schmiermittel versorgt. Eine erster Teilströmung I (Figur 5) des Kühl-/Schmiermittels wird über die Versorgungsnut 39 in die Bohrer-Spannut 7 geleitet, wodurch eine Späne-Abfuhr in der Bohrer-Spannut 7 unterstützt wird. Eine zweite Teilströmung II (Figur 5) des Kühl-/Schmiermittels wird über die Versorgungsnut 39 in die Steg-Nut 26 eingeleitet.

Ein Kern der Erfindung betrifft die nachfolgend beschriebenen Maßnahmen zur Unterstützung der Kühl- und/oder Schmiermittelströmung in der Steg-Nut 26. Demzufolge ist im Nutboden 25 der Steg-Nut 26 eine Pumpen- bzw. Strömungsleitkontur 41 ausgebildet. Mit Hilfe der Pumpen- bzw. Strömungsleitkontur 41 wird eine stabile, unterbrechungsfreie zweite Teilströmung des Kühl- und/oder Schmiermittels bereitgestellt. Die im Nutboden 25 der Steg-Nut 26 ausgebildete Pumpen- bzw. Strömungsleitkontur 41 wie folgt: So weist die Pumpen- bzw. Strömungsleitkontur 41 in der Figur 2 zwischen der Bohrerspitze und einer Scheitelstelle S eine drucksteigernde schaufelartige Vertiefung 43 im Nutboden 25 der Steg-Nut 26 auf. Die drucksteigernde schaufelartige Vertiefung 43 erstreckt sich ausgehend von der stirnseitigen Rückenkante 35 (Figur 4) über einen ersten Strömungsweg w₁ (Figur 4) bis zur Scheitelstelle S, und zwar mit einer sich kontinuierlich bis auf null reduzierenden Tiefe. Im weiteren Nutverlauf schließt sich unmittelbar an die Scheitelstelle S eine druckreduzierende schaufelartige Vertiefung 45 an. Die beiden Vertiefungen 43, 45 sind in den Figuren 2 und 4 durch Kreuzschraffur hervorgehoben.

Wie aus der Figur 1, 2 oder 5 hervorgeht, erstreckt sich die schneidenabgewandte Stützfase 23 nicht bis zum Spannschaft 1, sondern lediglich bis zu einer Unterbrechung 24 im Bereich der Bohrerspitze. Dadurch mündet die Spannut 26 im Strömungsverlauf nach der Pumpen- bzw. Strömungsleitkontur 41 an der Unterbrechung 24 in die Bohrer-Spannut 7 ein. Im Unterschied dazu verläuft die schneidenzugewandte Stützfase 19 von der Bohrerspitze unterbrechungsfrei bis zum Spannschaft 1. Die schneidenzugewandte Stützfase 19 ist in der Figur 3 um einen Überstand Δr durchmessergrößer ausgeführt als die schneidenabgewandte Stützfase 23.

In der Figur 4 ist die drucksteigernde schaufelartige Vertiefung 43 der Pumpen- bzw. Strömungsleitkontur 41 zur Bohrerspitze hin offen gestaltet, so dass sich ein Vertiefungsrand 47 der drucksteigernden schaufelartigen Vertiefung 43 in der stirnseitigen Rückenkante 35 wiederfindet.

Nachfolgend wird anhand der Figur 5 die Wirkungsweise der Pumpen- bzw. Strömungsleitkontur 41 beschrieben. Demzufolge wird im Bohrvorgang über den Zentralkanal 27 und die beiden Teilkanäle 31 Kühl- und/oder Schmiermittel (zum Beispiel ein Aerosol) bis zum jeweiligen Kanalaustritt 33 unter Druck zwangsgeführt. An der stirnseitigen Versorgungsnut 39 wird das Kühl- und/oder Schmiermittel unter Bildung der ersten und zweiten Teilströmung I, II in die Bohrer-Spannut 7 und in die Steg-Nut 26 geleitet. Mittels der Pumpen- bzw. Strömungsleitkontur 41 wird der Druck p_{II} in der zweiten Teilströmung zunächst in der drucksteigernden Vertiefung 43 erhöht, bis die Teilströmung II die Scheitelstelle S (das heißt den engsten Strömungsquerschnitt) erreicht. Anschließend erfolgt im weiteren Strömungsverlauf durch die druckreduzierende Vertiefung 45 eine Querschnittserweiterung mit korrespondierender Entspannung des Druckes p_{II}. Dadurch ergibt sich eine stabile Teilströmung II durch die Steg-Nut 26. Die Teilströmung II wird an der Unterbrechung 24 mit der durch die Bohrer-Spannut 7 geführten ersten Teilströmung I zusammengeführt.

Der Druck p_{I} der in der Bohrer-Spannut 7 strömenden ersten Teilströmung I ist um eine Druckdifferenz kleiner auszulegen als der Druck p_{II} der zweiten Teilströmung II an der Unterbrechung 24, damit die zweite Teilströmung II prozesssicher in die erste Teilströmung I überführt werden kann.

Wie aus der Figur 6 hervorgeht, weist die Verzweigungsstelle 29 im Vergleich zum Zentralkanal 27 einen wesentlich größeren Strömungsquerschnitt auf. Der Strömungsquerschnitt im jeweiligen Teilkanal 31 wird ausgehend von der Verzweigungsstelle 29 bis zum Kanalaustritt 33 konusartig verjüngt. Mittels der querschnittserweiterten Verzweigungsstelle 29 erfolgt im Bohrvorgang eine Strömungsberuhigung, wodurch starke Turbulenzen bei der Kühl- und/oder Schmiermittelzufuhr vermieden werden. Im Hinblick auf eine möglichst laminare Strömungsführung ist bevorzugt, wenn die zu den Kanalaustritten 33 führenden Teilkanäle 31 an der Verzweigungsstelle 29 unter Bildung eines Inneneckbereiches 49 an einer Scheitelspitze 51 spitzwinklig zusammenlaufen.

### BEZUGSZEICHENLISTE:

- 1: Spannschaft
- 3: Bohrkörper
- 5: Bohrer-Steg
- 7: Bohrer-Spannut
- 9: Hauptschneide
- 11: Spanfläche
- 13: stirnseitige Freifläche
- 15: Nebenschneide
- 17: äußere Stützfläche
- 19: schneidenzugewandte Stützfase
- 20: Seitenflanke
- 21: Schneidenecke
- 23: schneidenabgewandte Stützfase
- 24: Unterbrechung
- 25: Rückenfläche
- 26: Steg-Nut
- 27: Zentralkanal
- 29: Verzweigungsstelle
- 31: Teilkanäle
- 33: Kanalaustritt
- 35: Rückenkante
- 37: Nutrand
- 39: Versorgungsnut
- 41: Pumpen- bzw. Strömungsleitkontur
- 43: drucksteigernde Vertiefung
- 45: druckreduzierende Vertiefung
- 46: Übergangskante
- 47: Vertiefungsrand
- 49: Inneneckbereich
- 51: Scheitelspitze
- Δr: Überstand
- S: Scheitelstelle
- R: Rotationsachse
- p_{I}: Druck in der durch die Bohrer-Spannut geführten Teilströmung I
- p_{II}: Druck in der durch die Steg-Nut geführten Teilströmung II
- w₁, w₂: erster und zweiter Strömungsweg
- t: Nuttiefe

## Patentansprüche

1. Spiralbohrwerkzeug mit einem Spannschaft (1) und einem daran anschließenden Bohrkörper (3), entlang dessen Rotationsachse (R) sich spiralförmig zumindest ein Bohrer-Steg (5) bis zur Bohrerspitze erstreckt, wobei am Bohrer-Rücken des Bohrer-Stegs (5) eine Steg-Nut (26) ausgebildet ist, wobei die Steg-Nut (26) durch zwei in Bohrer-Umfangsrichtung voneinander beabstandete Stützfasen (19, 23) mit zwischengeordneter, den Nutboden (25) bildender Rückenfläche definiert ist, die um eine Nuttiefe (t) gegenüber den Stützfasen (19, 23) radial nach innen zurückgesetzt ist, und wobei im Spiralbohrwerkzeug zumindest ein Kühl- und/oder Schmiermittelkanal (27, 29, 31) verläuft, über den die Bohrerspitze mit Kühl- und/oder Schmiermittel versorgbar ist, **dadurch gekennzeichnet, dass** mittels des Kühl- und/oder Schmiermittels eine Späne-Abfuhr durch die Steg-Nut (26) unterstützt ist, und dass im Nutboden (25) der Steg-Nut (26) eine Pumpenkontur bzw. Strömungsleitkontur (41) ausgebildet ist, mittels der im Bohrvorgang eine stabile, unterbrechungsfreie Kühl- und/oder Schmiermittelströmung (II) durch die Steg-Nut (26) in Richtung auf den Spannschaft (1) gewährleistet ist.

2. Spiralbohrwerkzeug nach Anspruch 1, **dadurch gekennzeichnet, dass** mittels der Pumpen- bzw. Strömungsleitkontur (41) sich der Strömungsquerschnitt der Steg-Nut (26) von der Bohrerspitze über einen ersten Strömungsweg (w₁) in Richtung Spannschaft (1) bis Erreichen einer Scheitelstelle (S) verengt, und dass im weiteren Verlauf in Richtung Spannschaft (1) sich der Strömungsquerschnitt über einen zweiten Strömungsweg (w₂) ausweitet.

3. Spiralbohrwerkzeug nach Anspruch 1 oder 2, **dadurch gekennzeichnet, dass** die Pumpen- bzw. Strömungsleitkontur (41) zwischen der Bohrerspitze und einer Scheitelstelle (S) eine drucksteigernde schaufelartige Vertiefung (43) im Nutboden (25) der Steg-Nut (26) aufweist, und dass deren Strömungsquerschnitt über den ersten Strömungsweg (w₁) in Richtung auf den Spannschaft (1) kontinuierlich bis zur Scheitelstelle (S) abnimmt.

4. Spiralbohrwerkzeug nach Anspruch 1, 2 oder 3, **dadurch gekennzeichnet, dass** die Pumpen- bzw. Strömungsleitkontur (41) eine druckreduzierende schaufelartige Vertiefung (45) im Nutboden (25) der Steg-Nut (26) aufweist, und dass deren Strömungsquerschnitt über einen zweiten Strömungsweg (w₂) in Richtung auf den Spannschaft (1) kontinuierlich zunimmt, und/oder dass die druckreduzierende schaufelartige Vertiefung (45) mit axialem Abstand (w₁) zur Bohrerspitze im Nutboden (25) ausgebildet ist.

5. Spiralbohrwerkzeug nach Anspruch 4, **dadurch gekennzeichnet, dass** die druckreduzierende schaufelartige Vertiefung (45) an der Scheitelstelle (S) unmittelbar an die drucksteigernde schaufelartige Vertiefung (43) anschließt.

6. Spiralbohrwerkzeug nach einem der vorhergehenden Ansprüche, **dadurch gekennzeichnet, dass** der Bohrer-Steg (5) in der Bohrer-Umfangsrichtung an eine Bohrer-Spannut (7) grenzt, durch die im Bohrvorgang erzeugte Späne in Richtung Spannschaft (1) abführbar sind, und dass sich die Bohrer-Spannut (7) in Richtung Bohrerspitze bis zu einer, stirnseitig am Bohrersteg (5) ausgebildeten Hauptschneide (9) erstreckt, an der eine Spanfläche (11) der Bohrer-Spannut (7) und eine stirnseitige Freifläche (13) der Bohrerspitze zusammenlaufen, und/oder dass insbesondere die Spanfläche (11) der Bohrer-Spannut (7) an einer in Bohrerlängsrichtung spiralförmig verlaufenden Nebenschneide (15) in eine Stützfläche (17) einer schneidenzugewandten Stützfase (19) übergeht.

7. Spiralbohrwerkzeug nach Anspruch 6, **dadurch gekennzeichnet, dass** die Pumpen- bzw. Strömungsleitkontur (41) unmittelbar an der schneidenabgewandten Stützfase (23) angeordnet ist, und dass insbesondere die schneidenabgewandte Stützfase (23) eine Seitenflanke (20) aufweist, die die Steg-Nut (26) begrenzt, und/oder dass die Seitenflanke (20) kantenfrei und/oder flächenbündig in die schaufelartige Vertiefung (43, 45) der Pumpen- bzw. Strömungsleitkontur (41) übergeht, und/oder dass die schaufelartige Vertiefung (43, 45) an einer Übergangskante (46) in den Nutboden (25) der Steg-Nut (26) übergeht, und dass insbesondere die schaufelartige Vertiefung (43, 45) in Bohrerumfangsrichtung mit Abstand zur schneidenzugewandten Stützfase (19) angeordnet ist.

8. Spiralbohrwerkzeug nach Anspruch 7, **dadurch gekennzeichnet, dass** die Steg-Nut (26) im Strömungsverlauf nach der Pumpen- bzw. Strömungsleitkontur (41) an einer Unterbrechung (24) in die Bohrer-Spannut (7) einmündet, und dass insbesondere die Unterbrechung (24) an der schneidenabgewandte Stützfase (23) ausgebildet ist.

9. Spiralbohrwerkzeug nach Anspruch 3 bis 8, **dadurch gekennzeichnet, dass** die Steg-Nut (26) zur Bohrerspitze hin offen gestaltet ist und mit einer offenen Nutausnehmung an der stirnseitigen Freifläche (13) der Bohrerspitze abschließt, und/oder dass insbesondere die drucksteigernde schaufelartige Vertiefung (43) der Pumpen- bzw. Strömungsleitkontur (41) zur Bohrerspitze hin offen gestaltet ist und mit einem Vertiefungsrand (47) an der stirnseitigen Freifläche (13) der Bohrerspitze abschließt.

10. Spiralbohrwerkzeug nach einem der vorhergehenden Ansprüche, **dadurch gekennzeichnet, dass** der Kühl- und/oder Schmiermittelkanal einen Kanalaustritt (33) aufweist, der in der stirnseitigen Freifläche (13) der Bohrerspitze ausgebildet ist, und dass insbesondere in der stirnseitigen Freifläche (13) eine Versorgungsnut (39) ausgebildet ist, über die der Kanalaustritt (33) mit der Steg-Nut (26) und/oder mit der Bohrer-Spannut (7) strömungstechnisch verbunden ist.

11. Spiralbohrwerkzeug nach einem der vorhergehenden Ansprüche, **dadurch gekennzeichnet, dass** der Kühl- und/oder Schmiermittelkanal einen koaxial zur Rotationsachse (R) des Spiralbohrwerkzeugs verlaufenden Zentralkanal (27) aufweist, der an einer Verzweigungsstelle (29) in zumindest einen zum Kanalaustritt (33) führenden Teilkanal (31) übergeht, und/oder dass der Strömungsquerschnitt in der Verzweigungsstelle (29) größer als im Zentralkanal (27) ist, und/oder dass der Strömungsquerschnitt im Teilkanal (31) ausgehend von der Verzweigungsstelle (29) bis zum Kanalaustritt (33) sich insbesondere konusartig verjüngt.

12. Spiralbohrwerkzeug nach Anspruch 11, **dadurch gekennzeichnet, dass** bei einem zwei- oder mehrschneidigen Spiralwerkzeug zumindest zwei Bohrer-Stege (5) mit jeweils einem stirnseitigen Kanalaustritt (33) vorgesehen sind, und dass die zumindest zwei, zu den Kanalaustritten (33) führenden Teilkanäle (31) an der Verzweigungsstelle (29) unter Bildung eines Inneneckbereiches (49) an einer Scheitelspitze (51) spitzwinklig zusammenlaufen.

13. Spiralbohrwerkzeug nach einem der Ansprüche 8 bis 12, **dadurch gekennzeichnet, dass** die schneidenzugewandte Stützfase (19) um einen Überstand (Δr) durchmessergrößer ist als die schneidenabgewandte Stützfase (23).

## Claims

1. Twist drilling tool having a clamping shank (1) and a drill body (3) adjoining the latter, along the axis of rotation (R) of which at least one drill bit land (5) extends spirally as far as the drill bit tip, wherein a land flute (26) is formed on the drill bit back of the drill bit land (5), wherein the land flute (26) is defined by two supporting bevels (19, 23) spaced apart from one another in the drill bit circumferential direction with a back face, forming the flute bottom (25), arranged in between, said back face being set back radially inwardly by a flute depth (t) with respect to the supporting bevels (19, 23), and wherein at least one coolant and/or lubricant channel (27, 29, 31), via which the drill bit tip is able to be supplied with coolant and/or lubricant, extends in the twist drilling tool, **characterized in that** removal of chips through the land flute (26) is supported by means of the coolant and/or lubricant, and **in that**, in the flute bottom (25) of the land flute (26), a pumping contour or flow conducting contour (41) is formed, by means of which a stable, uninterrupted coolant and/or lubricant flow (II) through the land flute (26) in the direction of the clamping shank (1) is ensured during drilling operation.

2. Twist drilling tool according to Claim 1, **characterized in that**, by means of the pumping or flow conducting contour (41), the flow cross section of the land flute (26) narrows from the drill bit tip via a first flow path (w₁) in the direction of the clamping shank (1) until it reaches an apex point (S), and **in that**, on continuing in the direction of the clamping shank (1), the flow cross section widens via a second flow path (w₂).

3. Twist drilling tool according to Claim 1 or 2, **characterized in that** the pumping or flow conducting contour (41) has, between the drill bit tip and an apex point (S), a pressure-increasing blade-like recess (43) in the flute bottom (25) of the land flute (26), and **in that** the flow cross section thereof decreases continuously in the direction of the clamping shank (1) as far as the apex point (S) via the first flow path (w₁).

4. Twist drilling tool according to Claim 1, 2 or 3, **characterized in that** the pumping or flow conducting contour (41) has a pressure-reducing blade-like recess (45) in the flute bottom (25) of the land flute (26), and **in that** the flow cross section thereof increases continuously in the direction of the clamping shank (1) via a second flow path (w₂), and/or **in that** the pressure-reducing blade-like recess (45) is formed in the flute bottom (25) at an axial spacing (w₁) from the drill bit tip.

5. Twist drilling tool according to Claim 4, **characterized in that** the pressure-reducing blade-like recess (45) directly adjoins the pressure-increasing blade-like recess (43) at the apex point (S).

6. Twist drilling tool according to one of the preceding claims, **characterized in that** the drill bit land (5) borders, in the drill bit circumferential direction, a drill bit chip flute (7) through which chips created during drilling operation are able to be removed in the direction of the clamping shank (1), and **in that** the drill bit chip flute (7) extends in the direction of the drill bit tip as far as a main lip (9) which is formed on the end face of the drill bit land (5) and at which a rake face (11) of the drill bit chip flute (7) and a frontal flank face (13) of the drill bit tip converge, and/or **in that** in particular the rake face (11) of the drill bit chip flute (7) transitions at a secondary lip (15), extending spirally in the drill bit longitudinal direction, into a supporting face (17) of a supporting bevel (19) next to the lip.

7. Twist drilling tool according to Claim 6, **characterized in that** the pumping or flow conducting contour (41) is arranged directly at the supporting bevel (23) away from the lip, and **in that** in particular the supporting bevel (23) away from the lip has a side flank (20) that delimits the land flute (26), and/or **in that** the side flank (20) transitions without an edge and/or flush into the blade-like recess (43, 45) of the pumping or flow conducting contour (41), and/or **in that** the blade-like recess (43, 45) transitions into the flute bottom (25) of the land flute (26) at a transition edge (46), and **in that** in particular the blade-like recess (43, 45) is arranged at a distance in the drill bit circumferential direction from the supporting bevel (19) next to the lip.

8. Twist drilling tool according to Claim 7, **characterized in that** the land flute (26) opens into the drill bit chip flute (7) at an interruption (24) downstream of the pumping or flow conducting contour (41) in the flow path, and **in that** in particular the interruption (24) is formed on the supporting bevel (23) away from the lip.

9. Twist drilling tool according to Claims 3 to 8, **characterized in that** the land flute (26) is designed to be open towards the drill bit tip and terminates with an open flute cutout at the frontal flank face (13) of the drill bit tip, and/or **in that** in particular the pressure-increasing blade-like recess (43) of the pumping or flow conducting contour (41) is designed to be open towards the drill bit tip and terminates with a recess rim (47) at the frontal flank face (13) of the drill bit tip.

10. Twist drilling tool according to one of the preceding claims, **characterized in that** the coolant and/or lubricant channel has a channel outlet (33) that is formed in the frontal flank face (13) of the dill bit tip, and **in that** in particular a supply flute (39) is formed in the frontal flank face (13), via which supply flute (39) the channel outlet (33) is fluidically connected to the land flute (26) and/or to the drill bit chip flute (7).

11. Twist drilling tool according to one of the preceding claims, **characterized in that** the coolant and/or lubricant channel has a central channel (27) extending coaxially with the axis of rotation (R) of the twist drilling tool, said central channel (27) transitioning at a branching point (29) into at least one part-channel (31) leading to the channel outlet (33), and/or **in that** the flow cross section is greater at the branching point (29) than in the central channel (27), and/or **in that** the flow cross section narrows in particular conically in the part-channel (31) from the branching point (29) to the channel outlet (33).

12. Twist drilling tool according to Claim 11, **characterized in that**, in a two- or multi-lip twist tool, at least two drill bit lands (5) that each have a frontal channel outlet (33) are provided, and **in that** the at least two part-channels (31), leading to the channel outlets (33), converge at an acute angle at the branching point (29), forming an internal corner region (49) at an apex tip (51).

13. Twist drilling tool according to one of Claims 8 to 12, **characterized in that** the supporting bevel (19) next to the lip is diametrically greater than the supporting bevel (23) away from the lip by a projecting length (Δr).

## Revendications

1. Outil de forage hélicoïdal comprenant une tige de serrage (1) et un corps de forage (3) qui s'y rattache, le long de l'axe de rotation (R) duquel s'étend en forme de spirale au moins une nervure de foret (5) jusqu'à la pointe de foret, une rainure de nervure (26) étant formée sur le dos de foret de la nervure de foret (5), la rainure de foret (26) étant définie par deux chanfreins d'appui (19, 23) espacés l'un de l'autre dans la direction circonférentielle du foret, avec une surface de dos agencée entre eux, formant le fond de rainure (25), qui est en retrait radialement vers l'intérieur d'une profondeur de rainure (t) par rapport aux chanfreins d'appui (19, 23), et au moins un canal de fluide de refroidissement et/ou de lubrification (27, 29, 31) s'étendant dans l'outil de forage hélicoïdal, par l'intermédiaire duquel la pointe de foret peut être alimentée en fluide de refroidissement et/ou de lubrification, **caractérisé en ce qu'une** évacuation de copeaux à travers la rainure de nervure (26) est favorisée par le fluide de refroidissement et/ou de lubrification, et **en ce qu'**un contour de pompage ou de guidage d'écoulement est formé dans le fond de rainure (25) de la rainure de nervure (26), au moyen duquel un courant de fluide de refroidissement et/ou de lubrification (II) stable, sans interruption est assuré pendant l'opération de forage à travers la rainure de nervure (26) en direction de la tige de serrage (1).

2. Outil de forage hélicoïdal selon la revendication 1, **caractérisé en ce qu'au** moyen du contour de pompage ou de guidage d'écoulement (41), la section transversale d'écoulement de la rainure de nervure (26) se rétrécit depuis la pointe de foret sur un premier trajet d'écoulement (w₁) en direction de la tige de serrage (1) jusqu'à atteindre un point de sommet (S), et **en ce que**, dans la suite du parcours en direction de la tige de serrage (1), la section transversale d'écoulement s'élargit sur un deuxième trajet d'écoulement (w₂).

3. Outil de forage hélicoïdal selon la revendication 1 ou 2, **caractérisé en ce que** le contour de pompage ou de guidage d'écoulement (41) présente, entre la pointe de foret et un point de sommet (S), un creux en forme d'aube augmentant la pression (43) dans le fond de rainure (25) de la rainure de nervure (26), et **en ce que** sa section transversale d'écoulement diminue continuellement sur le premier trajet d'écoulement (w₁) en direction de la tige de serrage (1) jusqu'au point de sommet (S).

4. Outil de forage hélicoïdal selon la revendication 1, 2 ou 3, **caractérisé en ce que** le contour de pompage ou de guidage d'écoulement (41) présente un creux en forme d'aube réduisant la pression (45) dans le fond de rainure (25) de la rainure de nervure (26), et **en ce que** sa section transversale d'écoulement augmente continuellement sur un deuxième trajet d'écoulement (w₂) en direction de la tige de serrage (1), et/ou **en ce que** le creux en forme d'aube réduisant la pression (45) est formé dans le fond de rainure (25) à une distance axiale (w₁) de la pointe de foret.

5. Outil de forage hélicoïdal selon la revendication 4, **caractérisé en ce que** le creux en forme d'aube réduisant la pression (45) est directement contigu au creux en forme d'aube augmentant la pression (43) au niveau du point de sommet (S).

6. Outil de forage hélicoïdal selon l'une quelconque des revendications précédentes, **caractérisé en ce que** la nervure de foret (5) est adjacente, dans la direction circonférentielle du foret, à une rainure à copeaux du foret (7), à travers laquelle les copeaux générés pendant l'opération de forage peuvent être évacués en direction de la tige de serrage (1), et **en ce que** la rainure à copeaux du foret (7) s'étend en direction de la pointe de foret jusqu'à un tranchant principal (9) formé côté frontal sur la nervure de foret (5), au niveau duquel une surface à copeaux (11) de la rainure à copeaux du foret (7) et une surface libre côté frontal (13) de la pointe de foret se rejoignent, et/ou notamment **en ce que** la surface à copeaux (11) de la rainure à copeaux du foret (7) est suivie, au niveau d'un tranchant secondaire (15) s'étendant en forme de spirale dans la direction longitudinale du foret, par une surface d'appui (17) d'un chanfrein d'appui tourné vers le tranchant (19).

7. Outil de forage hélicoïdal selon la revendication 6, **caractérisé en ce que** le contour de pompage ou de guidage d'écoulement (41) est agencé directement sur le chanfrein d'appui détourné du tranchant (23), et notamment **en ce que** le chanfrein d'appui détourné du tranchant (23) présente un flanc latéral (20) qui délimite la rainure de nervure (26), et/ou **en ce que** le flanc latéral (20) est suivi sans arête et/ou en affleurement de surface par le creux en forme d'aube (43, 45) du contour de pompage ou de guidage d'écoulement, et/ou **en ce que** le creux en forme d'aube (43, 45) est suivi au niveau d'une arête de transition (46) par le fond de rainure (25) de la rainure de nervure (26), et notamment **en ce que** le creux en forme d'aube (43, 45) est agencé dans la direction circonférentielle du foret à distance du chanfrein d'appui tourné vers le tranchant (19).

8. Outil de forage hélicoïdal selon la revendication 7, **caractérisé en ce que** la rainure de nervure (26) débouche dans le parcours d'écoulement après le contour de pompage ou de guidage d'écoulement (41) au niveau d'une interruption (24) dans la rainure à copeaux du foret (7), et notamment **en ce que** l'interruption (24) est formée au niveau du chanfrein d'appui détourné du tranchant (23).

9. Outil de forage hélicoïdal selon les revendications 3 à 8, **caractérisé en ce que** la rainure de nervure (26) est conçue sous forme ouverte vers la pointe de foret et se termine par un évidement de rainure ouvert sur la surface libre côté frontal (13) de la pointe de foret, et/ou notamment **en ce que** le creux en forme d'aube augmentant la pression (43) du profil de pompage ou de guidage d'écoulement (41) est conçu sous forme ouverte vers la pointe de foret et se termine par un bord de creux (47) sur la surface libre côté frontal (13) de la pointe de foret.

10. Outil de forage hélicoïdal selon l'une quelconque des revendications précédentes, **caractérisé en ce que** le canal de fluide de refroidissement et/ou de lubrification présente une sortie de canal (33), qui est formée dans la surface libre côté frontal (13) de la pointe de foret, et notamment **en ce qu'**une rainure d'alimentation (39) est formée dans la surface libre côté frontal (13), par l'intermédiaire de laquelle la sortie de canal (33) est reliée fluidiquement à la rainure de nervure (26) et/ou à la rainure à copeaux du foret (7).

11. Outil de forage hélicoïdal selon l'une quelconque des revendications précédentes, **caractérisé en ce que** le canal de fluide de refroidissement et/ou de lubrification présente un canal central (27) s'étendant coaxialement à l'axe de rotation (R) de l'outil de forage hélicoïdal, qui est suivi au niveau d'un point de ramification (29) par au moins un canal partiel (31) menant à la sortie de canal (33), et/ou **en ce que** la section transversale d'écoulement au point de ramification (29) est plus grande que dans le canal central (27), et/ou **en ce que** la section transversale d'écoulement dans le canal partiel (31) se rétrécit, notamment sous forme conique, à partir du point de ramification (29) jusqu'à la sortie du canal (33).

12. Outil de forage hélicoïdal selon la revendication 11, **caractérisé en ce que,** dans le cas d'un outil hélicoïdal à deux tranchants ou plus, au moins deux nervures de foret (5) sont prévues, chacune avec une sortie de canal côté frontal (33), et **en ce que** les au moins deux canaux partiels (31) menant aux sorties de canal (33) se rejoignent à angle aigu au niveau du point de ramification (29) en formant une zone de coin intérieur (49) au niveau d'une pointe de sommet (51).

13. Outil de forage hélicoïdal selon l'une quelconque des revendications 8 à 12, **caractérisé en ce que** le chanfrein d'appui tourné vers le tranchant (19) est plus grand en diamètre d'un dépassement (Δr) que le chanfrein d'appui détourné du tranchant (23).
